Europäisches Patentamt

European Patent Office

Office européen des brevets

(11) Publication number: **0 343 808**
**A2**

## (12) EUROPEAN PATENT APPLICATION

(21) Application number: 89304616.9

(51) Int. Cl.⁴: **G06K 11/06**

(22) Date of filing: 08.05.89

The title of the invention has been amended (Guidelines for Examination in the EPO, A-III, 7.3).

(30) Priority: 06.05.88 GB 8810786

(43) Date of publication of application:
29.11.89 Bulletin 89/48

(84) Designated Contracting States:
AT BE CH DE FR IT LI LU NL SE

(71) Applicant: JOHN MCGAVIGAN & COMPANY LIMITED
Woodilee Road
Kirkintilloch Glasgow, G66 3UW
Scotland(GB)

(72) Inventor: Thaniotis, Michael
4 Edgam Drive
Cardonald Glasgo, G52 Scotland(GB)

(74) Representative: Jones, Andrée Zena et al
CRUIKSHANK & FAIRWEATHER 19 Royal Exchange Square
Glasgow, G1 3AE Scotland(GB)

(54) **Pressure sensor device for determining co-ordinates of contact points.**

(57) A contact sensor device (10) of the kind which is adapted to detect pressure of a member (20) on its surface (21) is described. The device comprises a pair of resistive plates (22,24) which are separated by a spacer layer (26) such that the plates (22,24) contact only at a point below the point of pressure on the surface (21). A potential difference is applied across a first of the plates in a direction transverse of the plate and across the second place in a direction normal to the first mentioned direction. Measurement of at least two signals representative of separate resistance paths through both plates of the device are generated separately and are compared with reference calibration signals corresponding to a unique position on the touch surface, a match identifying the position of the point of contact. Embodiments of the device are described.

EP 0 343 808 A2

## CONTACT SENSOR DEVICE

The present invention relates to a contact sensor device of the kind which operates in response to the application of pressure to a surface thereof by a member touching said surface. The invention also relates to a device capable of detecting a sequence of successive positions at which the pressure is applied and thus to enable identification of a direction of movement of the member across the surface.

An example of an existing contact sensor device is provided by a touch pad made of conductive rubber. When a member, for example a finger nail, is in contact with or is moved across the touch pad, the conductive rubber is stressed at the point of pressure so that its electrical resistance changes. An external processor applies a potential difference across conductive rubber surface and the processor takes a reading, or sequence of readings, measuring the electrical resistance of the touch pad at the point(s) of contact. By comparing the reading(s) with either the previous reading or a reference reading, the processor detects the position of the finger or the direction of finger movement across the pad. The touch pad requires complicated switching of the applied potential difference to identify the position or positions, especially when used to detect movement in a given direction in the plane of the pad surface. The conductive rubber surface is also subject to wear as the rubber is stressed, particularly when the finger, especially the finger nail, is moved across the pad.

According to a first aspect of the present invention, there is provided a contact sensor device for use with an external processor, said device comprising first and second resistive plates disposed one upon the other, at least one of said plates being resilient and said plate being provided with a touch surface, insulating spacing means disposed between said first and second resistive plates, said spacing means being arranged to prevent contact between said resistive plates in the absence of a point of pressure on said touch surface and to permit contact therebetween when a point of pressure is present, a first set of electrical terminal means arranged with respect to said first plate so that when a potential difference is applied across said first set of terminal means an electrical field is set up across the plate in a first direction, a second set of electrical terminal means arranged with respect to said second plate so that an electrical field is similarly set up across the second plate in a second direction substantially normal to the first direction, whereby in response to pressure applied at a position on the touch surface to bring the plates into contact with one another at said position, at least two signals representative of separate resistance paths through both plates of the device are generated separately and are compared with reference calibration signals corresponding to a unique position on the touch surface, a match identifying the position of the point of contact.

Conveniently the first and second mentioned potential differences may be of the same magnitude.

Advantageously, the processor may compare each positional reading at the point at which the plates are in contact with the previous reading of the contact position of the plates to give an indication of the direction of movement of the point of pressure.

Alternatively each positional reading at the point at which the plates are in contact may be compared with a reference reading to give an indication of the positional changes of the point at which the plates are in contact.

Preferably, the spacing means is in part provided by an applied pattern of droplet-shaped deposits of non-conductive material. Conveniently, said deposits may be applied by a printing technique, for example screen printing.

According to one mode of use the pressure on said touch surface is applied by a finger pressing down on said touch surface. In another mode of use said point of pressure is applied by a pressure element which is moved across the surface of said contact sensor device.

According to a second aspect of the present invention there is provided a method of identifying the position of an individual point of contact of two resistive plates in a contact sensor device wherein said plates are disposed one above the other and normally maintained in a spaced-apart relationship in the absence of pressure applied at said point comprising the steps of: applying a potential difference across one of said resistive plates, obtaining a first signal from the other plate representative of a first resistance path through said device, removing the first potential difference then applying a second potential difference to the other of said resistive plates in a direction substantially normal to that of said first applied potential difference, obtaining a second signal from said one resistive plate representative of a second separate resistive path through said device, comparing the first and second signals with reference calibration signals corresponding to a unique position on the touch surface, a match identifying the position of the point of contact.

In one embodiment of the invention, two resistive plates are disposed one above the other and are separated by a pattern of droplet-like deposits of non-conductive material arranged in such a manner that the resistive plates are permitted to contact each other only at a point directly below the point of pressure on a surface of the device. An external processor applies a potential difference alternately to the first and second resistive plates. The direction in which the potential difference is applied to the second plate is normal or substantially normal to the direction in which the potential difference is applied to the first plate. Each time a potential difference is applied to a resistive plates, the resistance of the plates, at the point at which the plates are in contact, is measured. Each of these resistance readings give an indication of the position of the contact region of the resistive plates.

There will now be described two embodiments of the invention. It will be understood that the description which is read with reference to the drawings, is given by way of example only and not by way of limitation.

In the drawings:

Fig. 1 is a diagrammatic view of a system incorporating a contact sensor device in accordance with the present invention;

Fig. 2 is an enlarged diagrammatic perspective view of the sensor shown in Fig. 1 with parts broken away for clarity;

Fig. 3 is an exploded perspective view of the contact sensor device shown in Fig. 2;

Fig. 4 is a diagram of a circuit for use with the contact sensor device shown in Fig. 1;

Fig. 5 is an exploded perspective view of a second embodiment of a contact sensor device in accordance with the present invention;

Figs. 6A to 6E are diagrammatic plan views of the layers which when assembled together, make up the contact sensor device in shown in Fig. 5.

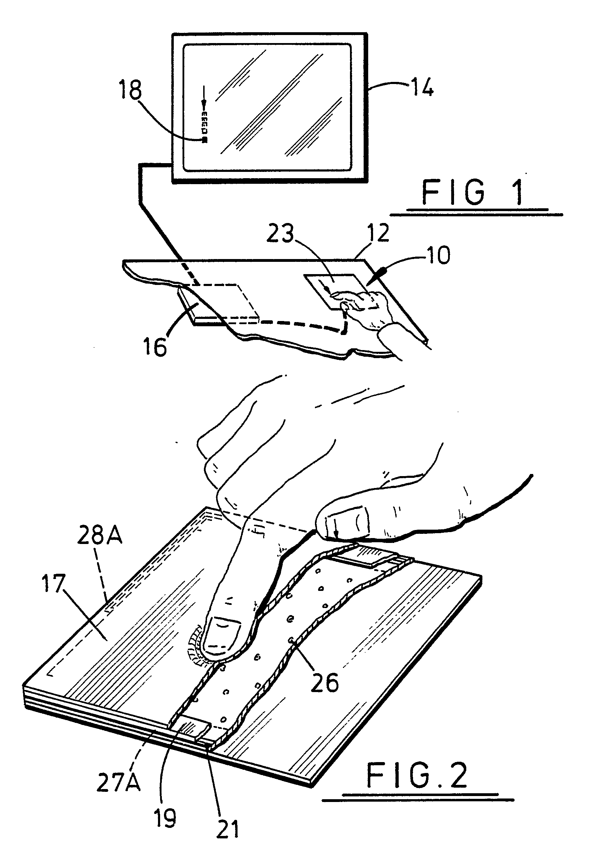

Reference is firstly made to Fig. 1 of the drawings which is a diagrammatic view of a system using a contact sensor device generally indicated by reference numeral 10, and mounted on a keyboard 12. The keyboard 12 is connected to video display unit (VDU) 14 through processor 16. In the example described hereinafter the contact sensor device 10 is used to allow control of the movement of a cursor 18 on the screen of the VDU 14. However, it is understood that this is merely one example of a situation in which the contact sensor device according to the invention may be used.

The cursor 18 follows in the direction of movement of a finger 20 rubbed across the surface 23 of the contact sensor device 10, for example downwards as shown. The cursor 18 can be thus moved in any direction across the screen. A sequence of voltage readings, as described below, are received by the processor 16 according to the position of finger 20 on the surface 23 of contact sensor device 10. Each positional reading of the finger 20 is compared with a reference reading or a previous positional reading so that if a number of successive positional readings are taken as the finger 20 rubs across the surface 23 of the contact sensor device 10, the direction of finger movement is indicated on the screen.

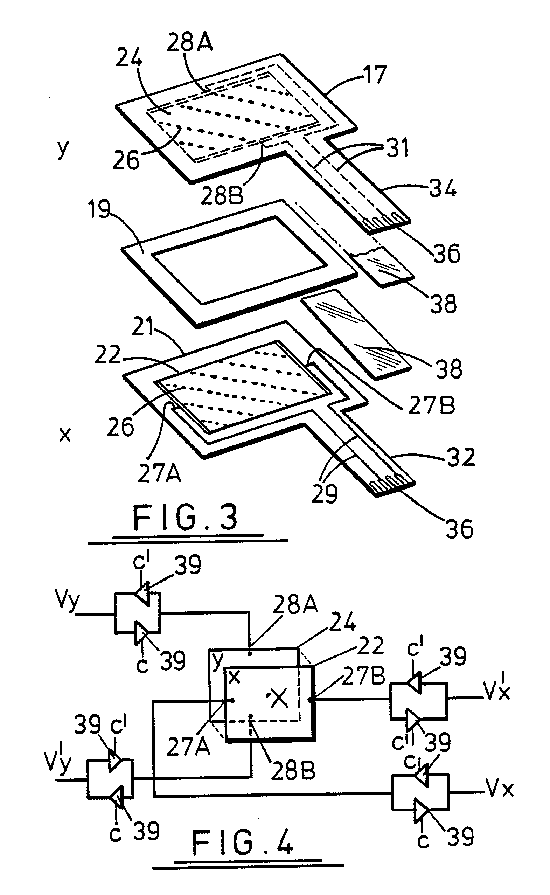

Reference is now made to Figs. 2 and 3 of the drawings which show a first embodiment of a contact sensor device 10. The contact sensor device comprises layers 17 and 21 of flexible isotropic material which are assembled together as shown in Fig. 2. The surface 23 may be provided by either layer 17 or layer 21. A first rectangular resistive plate 22 is provided by screen printing a coating of resistive material onto layer 17 and a second rectangular resistive plate 24 is formed similarly by coating layer 21. When assembled together as shown in Fig. 2, the resistive plates 22, 24 are maintained in a separated condition by a layer 19 and by the presence of a plurality of raised deposits of non-conductive resin material 26 formed from resin droplets applied to the resistive material by a printing technique. In the present example the deposits are screen printed onto layers 17 and 21 which allow the resistive plates 22, 24 to contact each other only at a point directly below the point of finger pressure on the surface 23.

The first resistive plate 22 has first electrical connections 27A and 27B along opposite sides of the plate and the second resistive plate 24 has second electrical connections 28A and 28B also along opposite sides thereof, the second electrical connections 28A, B being arranged in a direction normal to that of the first electrical connections 27A, B so that the substantially parallel electrical field lines set up across plate 22 are orthogonal to the substantially parallel lines set up across plate 24. The electrical connections 27, 28 are provided by tracks 29, 31 formed by screen printing a silver deposit onto layers 17 and 21 respectively. The silver tracks 29, 31 extend along tail portions 32,34 (not shown in Fig. 2 in the interest of clarity) of layers 17,21 respectively to terminals 36. An insulating layer 38 such as U.V. dielectric (best shown in Fig. 3B) is applied by means of a printing step to each of tails 32,34 to insulate the tracks 29, 31 from each other in the assembled condition. The electrical connections 27, 28 are further insulated from each other by layer 19, which is a dielectric, when layers 17 and 21 are assembled with layer 19.

In operation, potential differences are alternately applied under the control of the processor 16 across the electrical connections 27, 28 of resistive plates 22, 24. These applied potential differences enable the processor 16 to measure a sequence of output voltages which are processed to give an indication of the position of the point at which the plates are in contact as will be described in detail.

Reference is now made to Figs. 1 and 4 of the drawings, Fig. 4 depicting a circuit connected to the resistive plates 22, 24. The surface 23 is rectangular and planar, and accordingly, each position of finger pressure in the plane can be represented by cartesian co-ordinates. Resistive plate 22 is regarded as an 'x co-ordinate' plate and resistive plate 24 is regarded as a 'y co-ordinate' plate. When the processor 16 detects the position of finger 20 on the surface 23 and accordingly the point at which resistive plates 22, 24 are in contact, the x and y co-ordinates of this point are to be ascertained.

When the device is first manufactured it must be calibrated so that for each unique point of contact between the plates 22 and 24 a unique pair of voltages is produced to enable later identification of a particular point of contact. This is done for each point of contact by firstly applying a voltage at $V_x$, setting voltages $V_y$ and $V'_y$ to zero and measuring the voltage between terminals $V'_x$ and either $V_y$ or $V'_y$ (28a or 28b). $V_x$ is then removed and a voltage is applied to $V_y$ with $V_x$ and $V'_x$ set to zero and the voltage measured between $V'_y$ and $V_x$ or $V'_x$ (27a or 27b). This procedure is repeated for points arranged in a rectilinear grid across the surface so that for each set of x, y co-ordinates on the contact surface a unique pair of voltages $V'_x$, $V'_y$ are produced . This information is stored in a look-up table form in a memory in the processor 16. Thus, for each unique set of x, y co-ordinates on the touch surface of the contact device there corresponds a unique pair of voltages and, as will be described, subsequent measurement of such a unique pair of voltages at a particular point of contact will automatically provide from the look-up table the set of x and y co-ordinates of that particular point so as to identify it.

This can best be understood with reference to Fig. 4 of the drawings in which there is shown a point of contact at position X. A voltage ($V_x$), + 5 volts, is first applied to terminal 27A of resistive plate 22. Terminals 28A and 28B are set to zero volts. The current flows from $V_x$ through terminal 27A across plate 22 and through contact point X to plate 24 the potential difference between $V'_x$ and $V_y$ being representative of the resistive path of the current through the device and of course, the point of contact X. The voltage value $V'_x$ is recorded and stored and the voltage $V_x$ is then removed.

A voltage of + 5 volts ($V_y$) is then applied to terminal 28A of resistance plate 24 and the potential at terminals 27A and 27B ($V_x, V'_x$) is set to zero. The potential difference between $V'_y$ and $V_x$

is measured as before and is dependent on the resistive path taken through plate 24, through contact X and through plate 22. The value of $V'_y$ is also recorded.

The measured values of $V'_x$ and $V'_y$ are fed to the processor 16 which compares these values with the stored values of voltage obtained during the calibration of the device and when a match is found it provides a signal representative of the x, y co-ordinates of the point contact X, thus defining in two dimensions the position of the point of contact on the surface 23 of contact sensor device. The signals representative of x and y are processed in accordance with standard procedures and are fed through the processor to the terminal where the position of X is displayed by a cursor on the screen (Fig. 1).

The technique described above may be repeated at one or more subsequent positions corresponding to the point of finger pressure to obtain subsequent x and y co-ordinates and the values are compared with the previous positional readings. A comparison of these values can be processed to provide an indication of the direction in which the point of finger pressure is moving across the surface 23. For example, assuming that the original x, y position measured was zero, corresponding to a position in the centre of the touch surface and the finger was moved left along a horizontal line in the negative x direction, a subsequent measured (x, y) value may be (-1,0) and anything with a minus value in the x domain would indicate that the direction of movement is to the left. Similarly, should the x value be positive then the direction of movement would be to the right. For the avoidance of doubt it will be appreciated that all measured voltages are positive, reference to a minus x value being relative to the reference position.

This can also be repeated for the ordinate value so that should the y value be positive this would indicate a direction upwards on the screen and if negative, downwards. A positive x and a positive y value would indicate a direction of movement in the sector $0°$ to $90°$, whereas two negative values (-x,-y) would indicate a movement in the opposite sector; between $180°$ and $270°$. In this way, it will be appreciated that the direction of movement of the point of pressure across the contact device can be monitored and displayed.

The processor 16 (shown in Fig. 1) controls the application of appropriate voltages to terminals 27A, 27B, 28A and 28B. These terminals are connected to processor 16 through tri-state buffers 39. Control signals are sent from processor 16 to 'open' these buffers 39 as required to allow processor 16 to control the application of the voltages to terminals 27A, 27B, 28A and 28B.

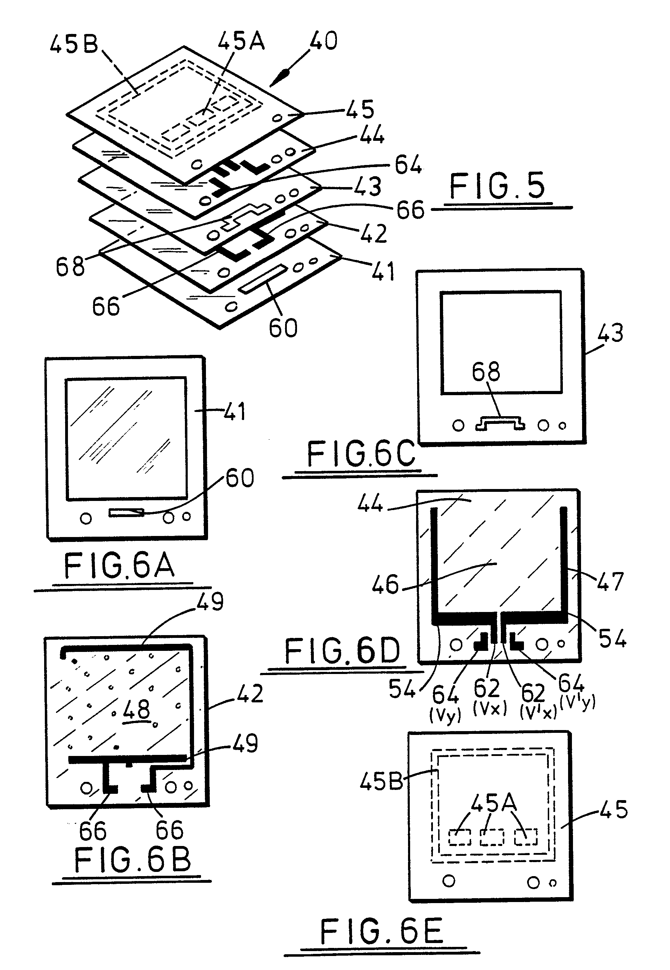

Reference is now made to Figs. 5 and 6A to 6E of the drawings which show a second embodiment comprising a contact sensor device 40. The device 40 comprises five thin polyester layers 41,42,43,44 and 45 which are assembled in the order shown in Fig. 5 to form the device 40. Each of these layers 41-45 are shown more clearly in Figs. 6A to 6E respectively. Layers 44 and 42 have indium/tin oxide resistive surfaces 46 and 48 and electrical connections 47 and 49 respectively. The layers 44 and 42 are assembled with intervening layer 43 which isolates the electrical connections 47 and 49 from each other.

The resistive surfaces 46 and 48 are formed by an etching process. Polyester layers 44 and 42 are coated with indium/tin oxide layer and the required areas of the resistive surfaces 46, 48 are coated with etch resist. Ferric chloride etch solution is used to remove the indium/tin oxide from the area not coated with etch resist. The etch resist is subsequently removed to provide the layer with a resistive surface 46, 48 which is transparent. Silver conductive tracks are subsequently screen printed onto the layers 44 and 42 to provide electrical connections 47 and 49 with the conductive surfaces 46, 48 respectively.

Layers 44 and 42 have a pattern of screen-printed deposits of non-conductive resin which are substantially similar to the deposits 26 of the first embodiment. When layers 44 and 42 are assembled with layer 43, these deposits provide a spacer means which normally maintains separation of resistive surfaces 46 and 48 and ensures that these surfaces come into contact only at a point below the point of pressure on the surface of the sensor device.

A backing layer 41 is bonded to layer 42 to provide rigidity to the device. A "secret-until-illuminated" front layer 45 of darkly tinted translucent material is bonded to layer 44. This layer 45 provides the touch surface for the device and appears substantially opaque unless illuminated by a light source (not shown) disposed behind the device. When the touch surface of the device is pressed, various messages may be displayed by the device, for example a portion 45A of the touch surface may light up when pressed and turn off when pressed again, such portions acting as on/off switch indicators or in any other, similar manner. A boundary line 45B defines the "touch" area of the device.

Backing layer 41 has a rectangular aperture 60 through which electrical connection may be made with the printed silver tracks 54. The tracks 47 on layer 44 have end portions 62 with which contact may be made through aperture 60. Also screen printed onto layer 44 are separate 'L'-shaped connection portions 64 which are also silver conductive tracks. As seen in Fig. 6D end portions 62 form terminals for voltages Vx and V'x and 'L'-shaped connection portions 64 form terminals for voltages Vy, V'y. Thus the circuity of Fig. 4 can be applied to this structure and the position of a plate contact point and direction of movement of the plate contact point can be calculated as described above.

When the layers 44 and 42 are assembled together around layer 43, connection portions 64 contact end portions 66 of conductive tracks 49 on layer 42 through aperture 68 of layer 43 after application of conductive adhesive to the appropriate areas before assembly. Thus an electrical connection to portions 64 of layer 44 through aperture 60 constitutes a direct electrical connection to conductive tracks 49 of layer 42, the adhesive ensuring an intimate contact between the conductive portions and the tracks. This arrangement of connection portions and apertures makes the sensor device more compact that the previous embodiment described by removing the need for an electrical tail. This is advantageous for ease of assembly in modern automatic assembly systems.

Contact sensor device 40 operates in a similar manner to that of the previous embodiment. An external processor control the applications of voltages to the terminals and the resistance of the plates is measured at the point of plate contact to gain an indication of the position of the point of plate contact and thus the corresponding position of the point of pressure on the surface of layer 45 of the device 40.

Various modifications may be made within the scope of the invention as defined by the following claims. For example, each positional reading of the point of finger pressure may be compared with a predetermined reference position set by user rather than the previous positional reading, to give an indication of direction of finger movement. For example, the reference position could be for x, y coordinates (x,y) (0,0) or (4,2) etc. depending on user requirements. The resistance of the plates may be varied to suit the equipment being used, but is preferably the same value in each plate. The sensitivity of the touch pad can be changed by using different sizes of resistance plates and varying the distance between resin deposits in the separation means. The resin deposits may be replaced by any form of spacing element which allows the resistance plates to be in contact only at a point below the point of finger pressure, such as a grid structure. It will be appreciated that measurements and calibrations may be made using other pairings of terminals, provided the selection of terminals is consistent.

Advantages associated with the present invention include the provision of a control sensor device which may be used to detect two dimensional movement without having a lever protruding from a keyboard. The control sensor device is not vulnerable to accidental movement and is not easily broken by mis-use. The device is not subject to excessive wear as the surface is merely rubbed and not stressed by finger pressure.

**Claims**

1. A contact sensor device for use with an external processor, said device comprising first and second resistive plates disposed one upon the other, at least one of said plates being resilient and said plate being provided with a touch surface, insulating spacing means disposed between said first and second resistive plates, said spacing means being arranged to prevent contact between said resistive plates in the absence of a point of pressure on said touch surface and to permit contact therebetween when a point of pressure is present, a first set of electrical terminal means arranged with respect to said first plate so that when a potential difference is applied across said first set of terminal means an electrical field is set up across the plate in a first direction, a second set of electrical terminal means arranged with respect to said second plate so that an electrical field is similarly set up across the second plate in a second direction substantially normal to the first direction, whereby in response to pressure applied at a position on the touch surface to bring the plates into contact with one another at said position, at least two signals representative of separate resistance paths through both plates of the device are generated separately and are compared with reference calibration signals corresponding to a unique position on the touch surface, a match identifying the position of the point of contact.

2. A device as claimed in claim 1 wherein said resistive plates are formed from flexible layers of sheet material to which have been applied a coating of resistive material.

3. A device as claimed in claim 2, wherein the coating is applied in selected areas of the layers by a printing technique.

4. A device as claimed in either one of claims 2 or 3 wherein electrical connections for the coatings of resistive material are applied by a printing technique.

5. A device as claimed in any one of claims 2 to 4 wherein the printing technique is a screen printing technique.

6. A device as claimed in any one of the preceding claims wherein the spacing means comprises a plurality of deposits of non-conductive material applied to at least one of confronting surfaces of said resistive plates.

7. A device as claimed in claim 6, wherein the deposits are of non-conductive resin material applied to the plates in a pattern of droplets by a printing technique.

8. A device as claimed in claim 7, wherein the printing technique is a screen printing technique.

9. A device as claimed in any one of the preceding claims wherein the resistive plates are substantially transparent.

10. A device as claimed in any one of the preceding claims wherein further layers are assembled with said plates, at least one of said layers being of tinted translucent material.

11. A device as claimed in any one of claims 1 to 10 wherein there is provided a further layer covering one of said resistive plates, said further layer provided a touch surface.

12. A device as claimed in claim 11 wherein the further layer providing the touch surface is of tinted translucent material.

13. A device as claimed in any one of the preceding claims wherein the layers comprising the device include apertures at positions appropriate to allow direct electrical connection to be formed between conductive tracks of the resistive plates.

14. A device as claimed in claim 13, wherein the layers comprising the device are secured together, at least in the region of said electrical connection, by means of a conductive adhesive or bonding agent.

15. A method of identifying the position of an individual point of contact of two resistive plates in a contact sensor device wherein said plates are disposed one above the other and normally maintained in a spaced apart relationship in the absence of pressure applied at said point, comprising the steps of applying a potential difference across one of said resistive plates, obtaining a first signal from the other plate representative of a first resistance path through said device, removing the first potential difference then applying a second potential difference to the other of said resistive plates in a direction substantially normal to that of said first applied potential difference, obtaining a second signal from said one resistive plate representative of a second separate resistive path through said device, comparing the first and second signals with reference calibration signals corresponding to a unique position on the touch surface, a match identifying the position of the point of contact.

16. A method as claimed in claim 15, wherein the first and second potential differences are of the same magnitude.

17. A method as claimed in claim 15 wherein, in a sequence of readings, each positional reading of the point of plate contact with the previous positional reading is compared so as to permit an indication of the direction of movement of the point of plate contact to be made.

18. A method as claimed in claims 15, wherein each positional reading of the point of plate contact is compared with a reference reading to permit an indication of the direction of movement of the point of plate contact to be made.

18

14

FIG 1

23    12    10

16

28A

17

26

27A

19    21

FIG.2

## FIG.3

## FIG.4

FIG.5

FIG.6A

FIG.6B

FIG.6C

FIG.6D

FIG.6E